# EUROPEAN PATENT APPLICATION

(11) **EP 3 919 420 A1**
(43) Date of publication of application: **08.12.2021**
(21) Application number: 20747925.4
(22) Date of filing: 31.01.2020
(51) Int. Cl.: B65G 61/00, G06Q 10/08

(54) **DATA PROCESSING DEVICE, DATA PROCESSING METHOD, DATA PROCESSING PROGRAM, EVALUATION SYSTEM, EVALUATION METHOD, AND EVALUATION PROGRAM**

(30) Priority: 31.01.2019 JP 2019016075
(71) Applicant: Asahi Kasei Kabushiki Kaisha, Tokyo 1000006 (JP)
(72) Inventor: IDEGAMI Naohiro, Tokyo 100-0006 (JP); KAMIYAMA Kenji, Tokyo 100-0006 (JP)
(74) Representative: Hoffmann Eitle
(86) International application number: PCT/JP2020/003768
(87) International publication number: WO 2020/158936

(57) **Abstract**

There is provided a data processing device including: an environment acquisition unit configured to acquire environmental data indicating a physical distribution environment of a perishable item; a state acquisition unit configured to acquire state data indicating a state of the perishable item; and a learning unit configured to learn an evaluation criterion for evaluating a physical distribution quality of the perishable item by using the environmental data based on the state data. Further, there is provided an evaluation system including: an environment acquisition unit configured to acquire environmental data of a surrounding atmosphere of a perishable item in response to the perishable item that is pre-cooled being placed in a container box with a refrigeration function and being physically distributed at room temperature; and an evaluation unit configured to evaluate a physical distribution quality by using the acquired environmental data.

## Description

### BACKGROUND

### 1. TECHNICAL FIELD

The present invention relates to a data processing device, a data processing method, a data processing program, an evaluation system, an evaluation method, and an evaluation program.

### 2. RELATED ART

In the related art, a management system for determining a storage quality of fresh food from a history of a storage environment when the fresh food is transported at a low temperature has been known. (Refer to, for example, Patent Document 1).

### [Citation List]

### [Patent Document]

[Patent Document 1] Japanese Patent Application Publication No. 2002-358591

### [Technical Problem]

In a management system of Patent Document 1, fresh food is transported in a low temperature environment, and a preset threshold value is used to determine a quality of a storage environment when the fresh food is transported in the low temperature environment. However, perishable items have different optimal storage conditions depending on various characteristics in relation to items, varieties, or the like. It is desirable to properly evaluate a physical distribution of such perishable items.

### GENERAL DISCLOSURE

In order to solve the above-described problem, a first aspect of the present invention provides a data processing device. The data processing device may include an environment acquisition unit configured to acquire environmental data indicating a physical distribution environment of a perishable item. The data processing device may include a state acquisition unit configured to acquire state data indicating a state of the perishable item. The data processing device may include a learning unit configured to learn an evaluation criterion for evaluating a physical distribution quality of the perishable item by using the environmental data based on the state data.

The state data may be data obtained by ranking the state of the perishable item into a plurality of ranks, and the learning unit may learn the evaluation criterion for each rank with respect to at least one of the plurality of ranks.

The data processing device may further include a characteristic acquisition unit configured to acquire characteristic data indicating a characteristic of the perishable item, and the learning unit may learn the evaluation criterion additionally based on the characteristic data.

The data processing device may further include an evaluation unit configured to evaluate the physical distribution quality according to the evaluation criterion by using the environmental data; and a result output unit configured to output an evaluation result of the physical distribution quality.

The evaluation unit may calculate, based on the evaluation result, a recommended storage environment for storing the perishable item before physical distribution.

The evaluation unit may calculate, based on the evaluation result, a recommended physical distribution environment for physically distributing the perishable item.

The recommended physical distribution environment may include a recommended amount of the perishable item.

The recommended physical distribution environment may include a recommended combination of perishable items, each of which being identical to the perishable item.

The evaluation unit may calculate, based on the evaluation result, a recommended storage life for storing the perishable item after physical distribution.

The environmental data may include at least any of a temperature, humidity, a gas composition, an illuminance, and a vibration over time in a surrounding atmosphere of the perishable item. The data processing device may include an environment acquisition unit configured to acquire environmental data indicating a physical distribution environment of a perishable item. A data processing device may include an evaluation unit configured to evaluate a physical distribution quality of the perishable item according to an evaluation criterion by using the environmental data. The data processing device may include a result output unit configured to output an evaluation result of the physical distribution quality. The evaluation unit may calculate, based on the environmental data, a recommended storage life for storing the perishable item after physical distribution, and the result output unit may display the recommended storage life. The evaluation unit may have, as the evaluation criterion, a machine-learned model trained to output the physical distribution quality by inputting the environmental data.

A second aspect of the present invention provides a data processing method in which a data processing device processes data. The data processing method may include acquiring, by the data processing device, environmental data indicating a physical distribution environment of a perishable item. The data processing method may include acquiring, by the data processing device, state data indicating a state of the perishable item. The data processing method may include learning, by the data processing device, an evaluation criterion for evaluating a physical distribution quality of the perishable item by using the environmental data based on the state data.

A third aspect of the present invention provides a data processing program. The data processing program may be executed by a computer. The data processing program may cause the computer to function as an environment acquisition unit configured to acquire environmental data indicating a physical distribution environment of a perishable item. The data processing program may cause the computer to function as a state acquisition unit configured to acquire state data indicating a state of the perishable item. The data processing program may cause the computer to function as a learning unit configured to learn an evaluation criterion for evaluating a physical distribution quality of the perishable item by using the environmental data based on the state data.

A fourth aspect of the present invention provides an evaluation system. The evaluation system may include an environment acquisition unit configured to acquire, in response to a perishable item that is pre-cooled being placed in a container box with a refrigeration function and being physically distributed at room temperature, environmental data of a surrounding atmosphere of the perishable item. The evaluation system may include an evaluation unit configured to evaluate a physical distribution quality by using the acquired environmental data.

A fifth aspect of the present invention provides an evaluation method in which an evaluation system performs an evaluation. The evaluation method may include acquiring, by the evaluation system, in response to a perishable item that is pre-cooled being placed in a container box with a refrigeration function and being physically distributed at room temperature, environmental data of a surrounding atmosphere of the perishable item. The evaluation method may include evaluating, by the evaluation system, a physical distribution quality by using the acquired environmental data.

A sixth aspect of the present invention provides an evaluation program. The evaluation program may be executed by a computer. The evaluation program may cause the computer to function as an environment acquisition unit configured to acquire, in response to a perishable item that is pre-cooled being placed in a container box with a refrigeration function and being physically distributed at room temperature, environmental data of a surrounding atmosphere of the perishable item. The evaluation program may cause the computer to function as an evaluation unit configured to evaluate a physical distribution quality by using the acquired environmental data.

The summary clause does not necessarily describe all necessary features of the embodiments of the present invention. The present invention may also be a sub-combination of the features described above.

### BRIEF DESCRIPTION OF THE DRAWINGS

Fig. 1 shows an evaluation system 10 according to the present embodiment.
Fig. 2 shows an example of a container box 200 used when a perishable item 20 is physically distributed in the evaluation system 10 according to the present embodiment.
Fig. 3 shows an example of a shipping source 30 in the evaluation system 10 according to the present embodiment.
Fig. 4 shows an example of a shipping flow performed in the shipping source 30 of the evaluation system 10 according to the present embodiment.
Fig. 5 shows an example in which the container box 200 is loaded on physical distribution means 40 to physically distribute the perishable item 20 in the evaluation system 10 according to the present embodiment.
Fig. 6 shows an example of a shipping destination 50 in the evaluation system 10 according to the present embodiment.
Fig. 7 shows a learning flow in which a data processing device 100 learns an evaluation criterion.
Fig. 8 shows an evaluation flow in which the data processing device 100 evaluates a physical distribution quality.
Fig. 9 shows an example of a computer 2200 in which a plurality of aspects of the present invention may be embodied entirely or partially.

### DESCRIPTION OF EXEMPLARY EMBODIMENTS

Hereinafter, the invention will be described through embodiments of the invention, but the following embodiments do not limit the invention according to claims. Further, not all of the combinations of features described in the embodiments are essential for means to solve the problem in the invention.

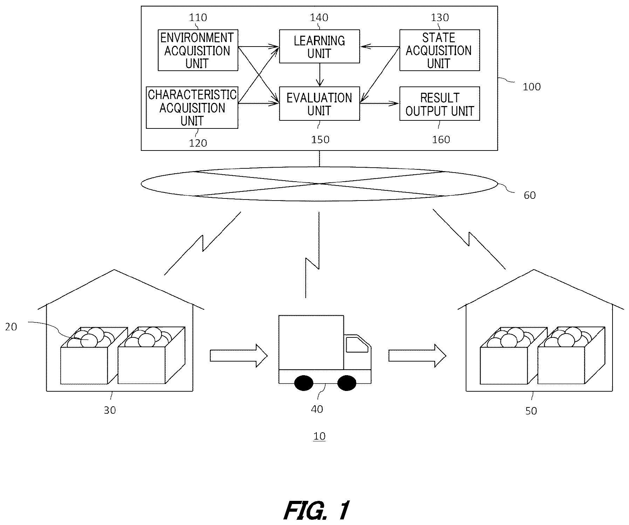

Fig. 1 shows an evaluation system 10 according to the present embodiment. The evaluation system 10 includes a shipping source 30, physical distribution means 40, a shipping destination 50, a network 60, and a data processing device 100. When a perishable item 20 that is pre-cooled in the shipping source 30 is physically distributed to the shipping destination 50 via the physical distribution means 40 at room temperature, the evaluation system 10 uses the data processing device 100 to evaluate a quality of a physical distribution, and freshness and quality of the perishable item. Further, it is possible to even predict a future state (for example, the freshness and quality retention period or the like.). Note that here, the physical distribution refers to an overall physical distribution through which goods are delivered from a shipping source to a shipping destination, and includes transportation, storage, cargo handling, packaging, distribution and processing, and the like. Further, these days, there are various physical distribution methods such as direct sales distribution and individual physical distribution to each household, and thus the shipping source 30 and the shipping destination 50 cannot be specified.

The perishable item 20 refers to overall goods that are required to be fresh, and here, includes fresh produce such as a vegetable and a fruit, fresh fish, processed food such as dressed meat, ham and sausage, flowers, and the like. Such a perishable item 20 has, for example, a unique feature such as soft tissue, a high water content, and daily physiology such as respiration and transpiration even after harvest. Therefore, the perishable item 20 is strongly affected by physical distribution environmental factors, and at the same time, one factor autocatalytically worsens another factor, which facilitates degradation of the quality of the perishable item 20. Therefore, the perishable item 20 has a much larger waste loss, which is due to a quality deterioration in a physical distribution process, compared to other products. However, as is often the case, it is unclear under what conditions the perishable item 20 has been physically distributed. The evaluation system 10 according to the present embodiment evaluates such physical distribution and quality of the perishable item of the perishable item 20.

The shipping source 30 indicates a starting point of the physical distribution of the perishable item 20, and is, for example, a collecting and shipping base or the like for collecting and shipping the perishable item 20. Further, the evaluation system 10 according to the present embodiment pre-cools the perishable item 20 in the shipping source 30. The pre-cooling refers to low temperature treatment applied to the perishable item 20 before shipment, and the pre-cooling makes it possible to quickly lower, for example, a high product temperature during harvest or at the time of processing and warehouse storage to slow down a metabolism and suppress consumption and deterioration of a component, as well as suppress increase in the product temperature during physical distribution after shipment to prevent worsening of the quality. In the evaluation system 10 according to the present embodiment, by pre-cooling the perishable item 20 in the shipping source 30 it is possible to carry out a so-called room temperature physical distribution in which a temperature of a surrounding atmosphere of the perishable item 20 is not actively controlled during physical distribution. This will be described below.

The physical distribution means 40 is means for physically distributing the perishable item 20 from the shipping source 30 to the shipping destination 50. In this figure, a case where the physical distribution means 40 is a truck as transportation means is shown as an example. However, the present invention is not limited to this. The physical distribution means 40 may be, for example, other transportation means such as a railway train, a ship, and an aircraft, may be other physical distribution means such as a warehouse for storing the perishable item 20, or may be a combination of these. In the evaluation system 10 according to the present embodiment, the physical distribution means 40 may not have a function of actively controlling the inside temperature besides a typically provided heating and cooling function. That is, the physical distribution means 40 may not be a so-called refrigerator car, freezer car, refrigerator, freezer, and the like.

The shipping destination 50 indicates an end point of the physical distribution of the perishable item 20, and is, for example, a wholesale market, a physical distribution center of a mass retailer, a direct sales market, a fresh produce processor, and the like. The perishable item 20 is physically distributed from the shipping source 30 to the shipping destination 50 via the physical distribution means 40, and is delivered from a production area to a consumption area.

The network 60 is an information communication network capable of connecting a plurality of computers to one another. The network 60 may be, for example, a global information communication network such as the Internet.

The data processing device 100 is connected to the network 60 and evaluates the physical distribution quality of the perishable item 20. The data processing device 100 may be a computer such as a PC (personal computer), a tablet computer, a smartphone, a workstation, a server computer, or a general-purpose computer, or may be a computer system to which a plurality of computers are connected. Such a computer system is also a computer in a broad sense. Further, the data processing device 100 may be implemented by one or more virtual computer environments that can be executed in the computer. Alternatively, the data processing device 100 may be a dedicated computer designed for evaluation of the physical distribution quality, or may be dedicated hardware realized by dedicated circuitry. When the network 60 is the Internet, the data processing device 100 may be realized by cloud computing. This makes it possible for the data processing device 100 to collect data from various environments in which the Internet is accessible, and to supply the processed data to another device in the various environments in which the Internet is accessible.

The data processing device 100 includes an environment acquisition unit 110, a characteristic acquisition unit 120, a state acquisition unit 130, a learning unit 140, an evaluation unit 150, and a result output unit 160.

The environment acquisition unit 110 acquires environmental data indicating a physical distribution environment of the perishable item 20, that is, environmental data of the surrounding atmosphere of the perishable item 20 in response to the perishable item 20 that is pre-cooled being placed in a container box with a refrigeration function and being physically distributed at room temperature. The environment acquisition unit 110 acquires the environmental data via the network 60, and supplies the acquired environmental data to the learning unit 140 and the evaluation unit 150. Alternatively, or additionally, the environment acquisition unit 110 may receive a keyboard operation, a mouse operation, and the like, by a user, to acquire the environmental data via a user input. Further, the environment acquisition unit 110 may acquire the environmental data via a memory device or the like that can store the data.

Here, the environmental data may be any environmental factor that can affect the metabolism and the quality deterioration of the perishable item 20. The environmental data may include, for example, at least any of a temperature, humidity, a gas composition, illuminance, and a vibration over time in the surrounding atmosphere of the perishable item 20. Some perishable item 20 continues an activity such as respiration to sustain life even after harvesting, and the more active such a life sustaining activity is, the more the freshness and the quality deteriorate due to nutrient decomposition and transpiration. By maintaining the surrounding atmosphere under a condition of a proper low temperature, high humidity, low oxygen, and high carbon dioxide, it is possible to suppress the metabolism, and to suppress the quality deterioration of the perishable item 20. Then, in order to maintain such an environment, it is important that the container box for packing the perishable item 20 is not carelessly unpacked. For example, such unpacking of the container box can be detected by the illuminance. Further, the perishable item 20 is externally damaged by vibration during transportation, and even in a case of the vibration that does not cause an external damage, the life sustaining activity is sensitively activated by the vibration. In this way, these environmental factors have great influences on the metabolism and the quality deterioration of the perishable item 20. Accordingly, the data processing device 100 can accurately evaluate the physical distribution quality of the perishable item 20 by acquiring these environmental factors.

The characteristic acquisition unit 120 acquires characteristic data indicating a characteristic of the perishable item 20. The characteristic acquisition unit 120 acquires the characteristic data via the network 60, and supplies the acquired characteristic data to the learning unit 140 and the evaluation unit 150. Alternatively, or additionally, the characteristic acquisition unit 120 may receive the keyboard operation, the mouse operation, and the like, by the user, to acquire the characteristic data via the user input. Further, the characteristic acquisition unit 120 may acquire the characteristic data via the memory device that can store the data, or the like.

Here, the characteristic data may be any characteristic factor which the perishable item 20 has in advance, and which can affect a quality characteristic and a quality change characteristic of the perishable item 20. The characteristic data may be, for example, an item, a variety, a production area, a cultivation method, a grade, a degree of ripeness, a harvest time, an elapsed time after harvest, and the like. These characteristic factors have great influences on the quality characteristic and the quality change characteristic of the perishable item 20. Accordingly, the data processing device 100 can properly evaluate the physical distribution quality according to the characteristic of the perishable item 20 by acquiring these characteristic factors.

The state acquisition unit 130 acquires state data indicating a state of the perishable item 20. The state acquisition unit 130 acquires the state data via the network 60, and supplies the acquired state data to the learning unit 140 and the evaluation unit 150. Alternatively, or additionally, the state acquisition unit 130 may receive the keyboard operation, the mouse operation, and the like, by the user, to acquire the state data via the user input. Further, the state acquisition unit 130 may acquire the state data via the memory device that can store the data, or the like.

Here, the state data is data indicating the state of the perishable item 20 at the start of the physical distribution, or during physical distribution, or after physical distribution. The state of the perishable item 20 may be, for example, a state obtained by quantitatively evaluating a mass, a water content, a smell (a gas composition), a surface state, and the like of the perishable item 20, or may be a state obtained by a worker's assessment by a sensory evaluation. Further, the state data may be data obtained by ranking the state of the perishable item 20 into a plurality of ranks. The state data may be, for example, data obtained by ranking into two ranks such as "good" and "bad", or may be data obtained by ranking into three or more ranks such as "A rank", "B rank", ..., and "E rank".

The learning unit 140 learns an evaluation criterion for evaluating the physical distribution quality of the perishable item by using the environmental data based on the state data. At this time, the learning unit 140 may learn the evaluation criterion additionally based on the characteristic data. When the state data is the data obtained by ranking the state of the perishable item 20 into the plurality of ranks, the learning unit 140 may learn the evaluation criterion for each rank with respect to at least one of the plurality of ranks. This will be described below. The learning unit 140 supplies the learned evaluation criterion to the evaluation unit 150.

The evaluation unit 150 evaluates the physical distribution quality according to the evaluation criterion by using the acquired environmental data. At this time, the evaluation unit 150 uses the evaluation criterion learned by the learning unit 140 as the evaluation criterion of the physical distribution quality. Further, for example, the evaluation unit 150 may calculate, based on an evaluation result, a recommended storage environment for storing the perishable item 20 before physical distribution, a recommended physical distribution environment for physically distributing the perishable item 20, and a recommended storage life for storing the perishable item 20 after physical distribution (hereinafter, the recommended storage environment, the recommended physical distribution environment, and the recommended storage life are also collectively referred to as "recommended conditions"). Further, the learning unit 140 may learn a criterion for calculating any of the above-described recommended conditions by using the environmental data based on the state data. The evaluation unit 150 supplies, to the result output unit 160, the evaluation result, the recommended storage environment, the recommended physical distribution environment, and the recommended storage life.

The result output unit 160 outputs the evaluation result of the physical distribution quality, the recommended storage environment, the recommended physical distribution environment, and the recommended storage life. The result output unit 160 outputs the evaluation result or the like, for example, to another device via the network 60. Note that in the above description, the case where the result output unit 160 outputs the evaluation result or the like, for example, to another device via the network 60 is shown as an example, but the present invention is not limited to this. For example, the result output unit 160 may output the evaluation result or the like by a display on a monitor, may output the evaluation result or the like by a voice from a speaker, or may output the evaluation result or the like by writing to the memory device that can store the data, or the like.

Note that in this figure, the case where the environment acquisition unit 110, the characteristic acquisition unit 120, the state acquisition unit 130, the learning unit 140, the evaluation unit 150, and the result output unit 160 are integrally configured in one device as the data processing device 100 is shown as an example, but the present invention is not limited to this. At least a part of these functional units may be configured as a separate device. In particular, a learning algorithm executed by the learning unit 140 has a high computational load. Accordingly, the data processing device 100 may configure, for example, the learning unit 140 having such a high computational load as another device to achieve a distribution of the computational load.

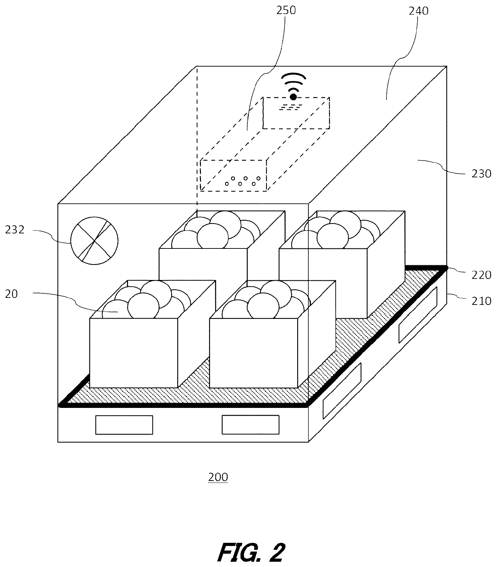

Fig. 2 shows an example of a container box 200 used when a perishable item 20 is physically distributed in the evaluation system 10 according to the present embodiment. For example, the perishable item 20 is packed, in a state of being placed in a package body such as corrugated cardboard, inside the container box 200 that has a refrigeration function, a moisturizing function, and a gas barrier function, as an example, as shown in this figure, and is physically distributed at room temperature. Note that the function of the container box 200 is not limited to these. For example, the container box 200 may have only the refrigeration function, and may not have at least any one of the moisturizing function and the gas barrier function. The container box 200 includes a pallet 210, a heat insulation sheet 220, a side wall panel 230, a top plate panel 240, and a sensor node 250.

The pallet 210 is a cargo handling platform on which the package body, in which the perishable item 20 is packed, is loaded. The pallet 210 may be formed of wood, or may be formed of moisture-resistant synthetic resin or the like. The pallet 210 has an insertion hole between legs into which a fork of a forklift or a pallet jack can be inserted. The pallet 210 may be, for example, a T11 type flat pallet for intermodal transportation which is standardized according to the Japanese Industrial Standards (JIS). Further, by providing the pallet with a seismic isolation function, it is possible to suppress deterioration due to vibration.

The heat insulation sheet 220 is a sheet formed of a heat insulation material and a gas barrier material that reduce heat transfer and heat conduction. The heat insulation sheet 220 is provided on an upper portion of the pallet 210. This makes the container box 200 reduce the heat transfer, the heat conduction, and permeation of moisture and gas between a lower portion of the container box 200 and an internal space of the container box 200.

The side wall panel 230 is a panel provided on the upper portion of the pallet 210 along four side surfaces of the pallet 210 via the heat insulation sheet 220. The side wall panel 230 is formed of a material having a heat insulation property and a gas barrier property similarly to the heat insulation sheet 220. This makes the container box 200 reduce the heat transfer, the heat conduction, and the permeation of moisture and gas between a right portion, a left portion, a front portion, and a rear portion of the container box 200, and the internal space of the container box 200.

Further, the side wall panel 230 has an adjustment valve 232 whose opening degree can be adjusted. By adjusting the opening degree of the adjustment valve 232, it is possible to change a size of a gap which communicates between the internal space and an external space of the container box 200. Note that in the above description, the case where the adjustment valve 232 is provided on the side wall panel 230 is shown as an example, but the adjustment valve 232 may be installed at any place, and may be, for example, provided on the top plate panel 240.

The top plate panel 240 is a panel which is provided on an upper portion of the side wall panel 230 and forms a top surface of the container box 200. The top plate panel 240 is formed of a material having a heat insulation property and a gas barrier property similarly to the side wall panel 230. This makes the container box 200 reduce the heat transfer, the heat conduction, and the permeation of moisture and gas between the upper portion of the container box 200 and the internal space of the container box 200.

In this way, the internal space of the container box 200 is shielded from the external space of the container box by a material having a heat insulation property and a gas barrier property, and thus the container box 200 has a high refrigeration function and gas barrier function. Further, the pallet 210 is integrally configured in the container box 200, and thus the perishable item 20 can be moved by the forklift, the pallet jack, or the like while being packed in the internal space, and it is possible to shorten a time for loading and unloading.

The sensor node 250 measures the environmental data indicating the physical distribution environment of the perishable item 20, that is, the environmental data of the surrounding atmosphere of the perishable item 20. The sensor node 250 may be, for example, a temperature sensor, a humidity sensor, a gas (O₂, CO₂, or the like) sensor, an illuminance sensor, a vibration sensor, and the like, and measures at least any of the temperature, the humidity, the gas composition, the illuminance, and the vibration in the surrounding atmosphere of the perishable item 20. Further, the sensor node 250 is provided with an IC tag, and wirelessly outputs the measured environmental data to the outside of the sensor node 250 via the IC tag. Note that in this figure, a case where the sensor node 250 is fixed to a lower surface of the top plate panel 240 is shown as an example. However, the sensor node 250 may be installed at any place, may be, for example, fixed to an upper surface of the heat insulation sheet 220, or may be fixed to an inner wall of the side wall panel 230. Further, in the above description, the case where the sensor node 250 is installed inside the container box 200 is shown as an example, but the present invention is not limited to this. The sensor node 250 may be installed on the outside of the container box 200 where it is possible to measure the environment of the surrounding atmosphere of the perishable item 20.

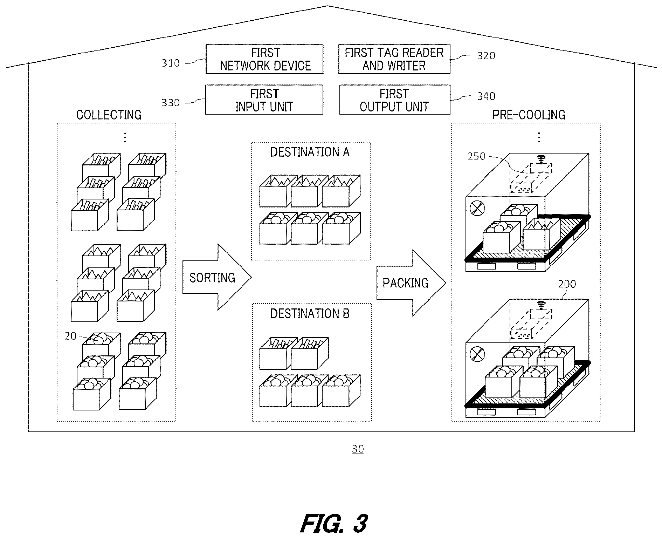

Fig. 3 shows an example of a shipping source 30 in the evaluation system 10 according to the present embodiment. In the shipping source 30, the perishable items 20 are collected, sorted, packed, and pre-cooled. The shipping source 30 includes a first network device 310, a first tag reader and writer 320, a first input unit 330, and a first output unit 340. Note that these functional units may be included in advance in the shipping source 30, or may be realized by a portable device or the like possessed by the worker in the shipping source 30.

The first network device 310 is a communication device that performs a relay between a network of the shipping source 30 and the external network 60. The first network device 310 is, for example, connected to the network 60 via a mobile phone communication network such as 3G or LTE, or WMAN (Wireless Metropolitan Area Network) such as WiMAX. Then, the first network device 310 relays the data acquired from another functional unit of the shipping source 30 to the external network 60, and also relays the data acquired from the external network 60 to another functional unit of the shipping source 30.

The first tag reader and writer 320 has a function of reading and writing the data from and to the IC tag provided in the sensor node 250 of the container box 200. A communication scheme between the first tag reader and writer 320, and the IC tag may be any communication scheme, and may be, for example, a communication scheme such as a FeliCa (registered trademark) communication scheme that can be mounted on an aircraft, a communication scheme of a specific low power for remote monitoring, ZigBee (registered trademark), and the like. The first tag reader and writer 320 reads an ID of the IC tag from the IC tag provided in the sensor node of each container box 200. Then, the first tag reader and writer 320 supplies the read ID to another functional unit of the shipping source 30.

The first input unit 330 receives the input of various types of data via the user input, the memory device, and the like. Then, the first input unit 330 supplies the various types of input data to another functional unit of the shipping source 30.

The first output unit 340 outputs the various types of data supplied from another functional unit of the shipping source 30. For example, the first output unit 340 may output the various types of data to another device via a wired or wireless manner, may output the various types of data by the monitor, the speaker, and the like, or may output the various types of data by writing to the memory device that can store the data, or the like.

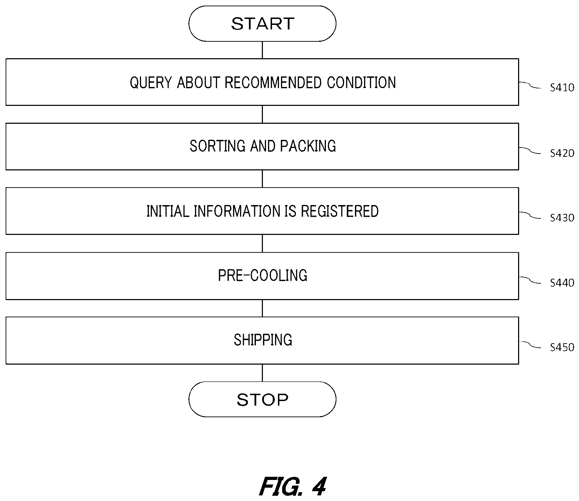

Fig. 4 shows an example of a shipping flow performed in the shipping source 30 of the evaluation system 10 according to the present embodiment. In step 410, the worker queries the data processing device 100 about the recommended condition via the network 60. In the shipping source 30, the various perishable items 20, which each have different pieces of characteristic data such as the item, the variety, the production area, the cultivation method, the grade, the degree of ripeness, and the harvest time, are collected. The first input unit 330 receives the user operation of the worker, to input, for example, the characteristic data, a destination as the shipping destination 50, a shipping amount, a shipping time, and the like of these perishable items 20. Then, the first network device 310 supplies the information to the data processing device 100 via the network 60. The first network device 310 acquires the recommended condition from the data processing device 100 as a response to the information. Then, the first output unit 340 outputs the recommended condition acquired by the first network device 310.

Here, the recommended condition may be, for example, the condition of the recommended storage environment for storing the perishable item 20 before physical distribution, the condition of the recommended physical distribution environment for physically distributing the perishable item 20, and the like. Further, the condition of the recommended physical distribution environment may be, for example, a recommended amount of the perishable item 20 when the perishable item 20 is physically distributed, and a recommended combination of the perishable items 20, and the like.

Next, in step 420, the worker sorts and packs the perishable item 20. For example, the worker sorts the perishable items 20 for each destination as the shipping destination 50 such that the shipping amount corresponds to each destination. Then, the worker packs the perishable item 20 in the container box 200 based on the condition of the recommended physical distribution environment output by the first output unit 340. At this time, for example, the first output unit 340 outputs the recommended condition of the combination of the perishable items 20 when the perishable items 20 are physically distributed, and causes the worker to make a selection, based on the combination, from among the perishable items 20 that are loaded in a mixed manner in the common container box 200. Then, the first output unit 340 outputs the recommended amount of perishable item 20 when the perishable item 20 is physically distributed, and causes the worker to pack the perishable item 20 in the container box 200 until a packing amount of the selected perishable item 20 satisfies the condition of the output amount.

Then, in step 430, the worker registers initial information. At this time, the first input unit 330 receives the user operation by the worker, to input the initial information of each container box 200, and to supply the initial information to the first network device 310. Then, the first network device 310 supplies the initial information to the data processing device 100 via the network 60. For example, the first input unit 330 associates, as the initial information, the tag ID of each container box 200 read by the first tag reader and writer 320 with the characteristic data of the perishable item 20 packed in the container box 200, to input the initial information. Then, the first network device 310 supplies the initial information to the data processing device 100 via the network 60 to register the initial information.

Next, in step 440, the worker pre-cools each container box 200. At this time, the first output unit 340 outputs the recommended storage environment acquired by the first network device 310 from the data processing device 100, and causes the worker to set the pre-cooling condition. For example, as the recommended storage environment, the first output unit 340 outputs, for each container box 200, a pre-cooling method such as ventilative pre-cooling, vacuum pre-cooling, and chilled water pre-cooling, a pre-cooling temperature, a pre-cooling time, and the like, and causes the worker to perform, for each container box 200, the pre-cooling in the optimal environment.

Then, in step 450, the worker moves, by the forklift or the like, each pre-cooled container box 200, and performs the shipping via the physical distribution means 40.

In this way, with the evaluation system 10 of the present embodiment, the perishable item 20 is pre-cooled in the shipping source and then packed in the container box 200, which has the refrigeration function, to be physically distributed, and thus the perishable item 20 itself can be caused to function as a refrigerant. Thereby, with the evaluation system 10 of the present embodiment, it is possible to physically distribute the perishable item 20 at room temperature without using, as the physical distribution means 40, the refrigerator car, the freezer car, the refrigerator, the freezer, and the like, and moreover, without using a coolant such as ice and dry ice, an ice pack, a latent heat storage material, and the like. Further, with the evaluation system 10 of the present embodiment, the perishable item 20 is pre-cooled by optimizing the storage environment condition while the combination and the amount of the perishable item 20 are adjusted, and thus it is possible to control the function of the perishable item 20 as a refrigerant in the physical distribution at room temperature. In this way, with the evaluation system 10 of the present embodiment, it is possible to reduce a risk of holding the refrigerator car, the freezer car, the refrigerator, the freezer, and the like, and it is also possible to prevent a low temperature damage and a freshness deterioration of the perishable item 20 which are due to misplacing or forgetting to place the ice pack, or the like.

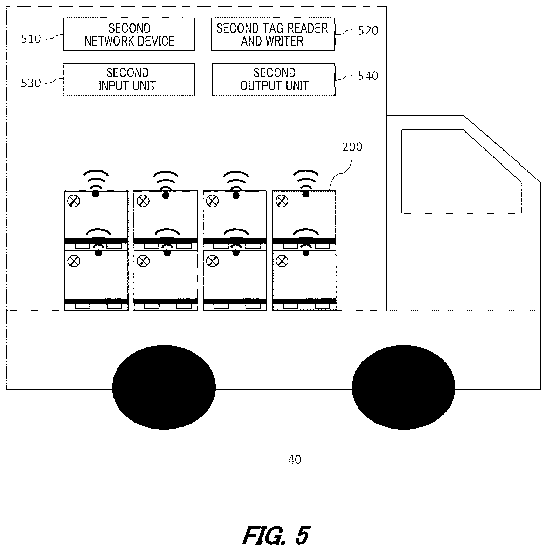

Fig. 5 shows an example in which the container box 200 is loaded on physical distribution means 40 to physically distribute the perishable item 20 in the evaluation system 10 according to the present embodiment. In this figure, the case where the physical distribution means 40 is a truck as transportation means is shown as an example, but the physical distribution means 40 may be, as described above, for example, other transportation means such as the railway train, the ship, and the aircraft, may be other physical distribution means such as the warehouse for storing the perishable item 20, or may be a combination of these. A plurality of container boxes 200 in which the perishable items 20 are packed is loaded on the physical distribution means 40, and the physical distribution means 40 physically distributes the perishable item 20 from the shipping source 30 to the shipping destination 50. The physical distribution means 40 may not have a function of actively controlling the temperature of the inside where the container box 200 is loaded. That is, the physical distribution means 40 may not be the so-called refrigerator car, freezer car, refrigerator, freezer, and the like.

The physical distribution means 40 includes a second network device 510, a second tag reader and writer 520, a second input unit 530, and a second output unit 540. Note that these functional units may be included in advance in the physical distribution means 40, or may be realized by the portable device or the like possessed by the worker in the physical distribution means 40. These functional units respectively have functions similar to those of the first network device 310, the first tag reader and writer 320, the first input unit 330, and the first output unit 340 that are included in the shipping source 30, and thus the duplicate description will be omitted.

In the physical distribution means 40, the second tag reader and writer 520 reads, from the sensor node 250 of each container box 200 during physical distribution, the environmental data of the surrounding atmosphere of the perishable item 20 packed in the container box 200 together with the ID of the IC tag provided in the sensor node 250. Then, the second network device 510 supplies, to the data processing device 100, the environmental data read by the second tag reader and writer 520 together with the ID via the network 60 over time. Here, as described above, the environmental data may include, for example, at least any of the temperature, the humidity, the gas composition, the illuminance, and the vibration over time in the surrounding atmosphere of the perishable item 20.

Further, when the state data of the perishable item 20 can be acquired during physical distribution, the second input unit 530 may receive the input of the state data of the perishable item 20. Then, the second network device 510 may associate the state data, which is input to the second input unit 530, with the tag ID of the container box 200, in which the perishable item 20 corresponding to the state data is packed, and supply the associated state data and the tag ID to the data processing device 100 via the network 60. At this time, when the perishable items 20 having different characteristic data from one another are loaded in a mixed manner in the common container box 200, the second input unit 530 may receive the input of the state data for each of the perishable items 20 having different characteristic data.

Note that in the above description, the case where the physical distribution means 40 includes the second network device 510, and the environmental data, the state data, or the like are supplied to the data processing device 100 via the second network device 510 during physical distribution is shown as an example, but the present invention is not limited to this. In a case of not having the second network device 510, or in a case of the network 60 being inaccessible via the second network device 510, the physical distribution means 40 may store, in storage means in chronological order, the various types of data during physical distribution, and supply the various types of data stored in the storage means to the data processing device 100 when the network 60 becomes accessible via another network device or the second network device 510. Further, instead of or in addition to the physical distribution means 40, the sensor node 250 may store, in the storage means in chronological order, the various types of data during physical distribution, and, for example, in any base, the various types of data during physical distribution may be read from the sensor node 250 to be supplied to the data processing device 100.

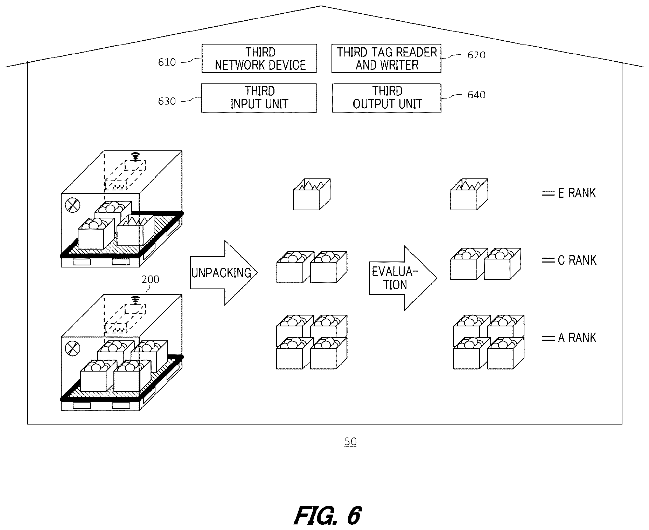

Fig. 6 shows an example of a shipping destination 50 in the evaluation system 10 according to the present embodiment. In the shipping destination 50, the container box 200 is unpacked and the state of the perishable item 20 is evaluated. The shipping destination 50 includes a third network device 610, a third tag reader and writer 620, a third input unit 630, and a third output unit 640. Note that these functional units may be included in advance in the shipping destination 50, or may be realized by the portable device or the like possessed by the worker in the shipping destination 50. These functional units respectively have functions similar to those of the first network device 310, the first tag reader and writer 320, the first input unit 330, and the first output unit 340 that are included in the shipping source 30, and thus the duplicate description will be omitted.

In the shipping destination 50, some container box 200 is unpacked, and the state of some perishable item 20 is evaluated for learning of the evaluation criterion. For example, the state of the perishable item 20 may be evaluated for a certain target period, and may not be evaluated after the period ends. Alternatively, the states of the perishable items 20 may be evaluated, by sampling, for only some target perishable items 20, and may not be evaluated for other perishable items 20. That is, when sufficient teacher data can be acquired for learning, the state of the perishable item 20 that is not used as the teacher data may not be directly evaluated, and the state of the perishable item 20 may be estimated from the evaluation result of the evaluation system according to the present embodiment. Thereby, with the evaluation system according to the present embodiment, the state of the perishable item 20 packed in the container box 200 can be grasped without unpacking the container box 200. Here, as described above, the state of the perishable item 20 may be, for example, the state obtained by quantitatively evaluating the mass, the water content, the smell, the surface state, and the like of the perishable item 20, or may be the state obtained by the worker's assessment by the sensory evaluation. The third input unit 630 may receive the input of the state data of the perishable item 20 ranked into the plurality of ranks based on these evaluation states. Then, the third network device 610 associates the state data, which is input to the third input unit 630, with the tag ID of the container box 200, in which the perishable item 20 corresponding to the state data is packed, and supplies the associated state data and the tag ID to the data processing device 100 via the network 60. At this time, when the perishable items 20 having different characteristic data from one another are loaded in a mixed manner in the common container box 200, the third input unit 630 may receive the input of the state data for each of the perishable items 20 having different characteristic data.

Further, when at least any of the evaluation result and the recommended storage life of the perishable item 20 can be acquired in the shipping destination 50, the third network device 610 may acquire, from the data processing device 100 via the network 60, at least any of the evaluation result and the recommended storage life for each perishable item 20. Then, the third output unit 640 may output at least any of the evaluation result and the recommended storage life for each perishable item 20 acquired by the third network device 610. In this way, the third output unit 640 can inform the worker of in what physical distribution quality the perishable item 20 has been physically distributed, and how long the perishable item 20 can be stored after physical distribution, or the like. This enables the worker to grasp, for example, the physical distribution quality and the freshness of the perishable item 20, and to set a price, a shelf life time, or the like of the perishable item 20 to optimal values.

In this way, the data processing device 100 acquires the environmental data indicating the physical distribution environment of the perishable item 20, that is, the environmental data of the surrounding atmosphere of the perishable item 20 in response to the perishable item 20 that is pre-cooled being placed in the container box with the refrigeration function and being physically distributed at room temperature. Further, the data processing device 100 can acquire the state data of the perishable item 20 during physical distribution or after physical distribution, the perishable item 20 being physically distributed in such an environment. The data processing device 100 according to the present embodiment learns the evaluation criterion for evaluating the physical distribution quality of the perishable item 20 by using the environmental data and the state data. That is, the data processing device 100 does not use a preset fixed criterion as the evaluation criterion for evaluating the physical distribution quality, and compares the environmental data of the perishable item 20 with the state data of the perishable item 20 to properly review the evaluation criterion.

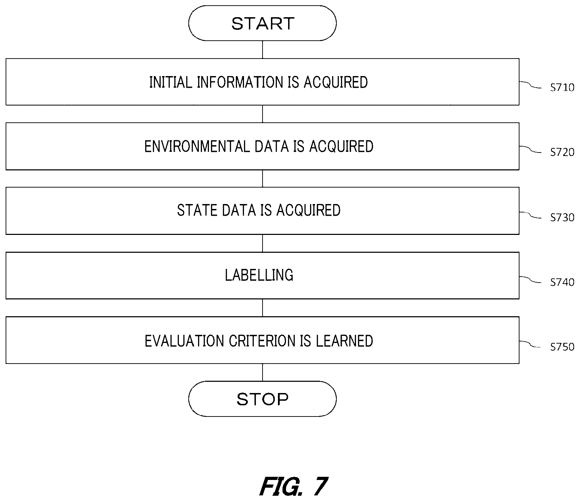

Fig. 7 shows a learning flow in which a data processing device 100 learns an evaluation criterion. In step 710, the data processing device 100 acquires the initial information before the start of the physical distribution. For example, the characteristic acquisition unit 120 of the data processing device 100 acquires, from the first network device 310 of the shipping source 30, the characteristic data of the perishable item 20 together with the tag ID of the container box 200 in which the perishable item 20 is packed.

Next, in step 720, the data processing device 100 acquires the environmental data indicating the physical distribution environment of the perishable item 20. For example, the environment acquisition unit 110 of the data processing device 100 acquires, from the second network device 510 of the physical distribution means 40, the environmental data of the surrounding atmosphere of the perishable item 20 together with the tag ID of the container box 200 in which the perishable item 20 is packed.

Then, in step 730, the data processing device 100 acquires the state data indicating the state of the perishable item 20. For example, from at least any of the second network device 510 of the physical distribution means 40, and the third network device 610 of the shipping destination 50, the state acquisition unit 130 of the data processing device 100 acquires the state data indicating the state of the perishable item 20 together with the tag ID of the container box 200 in which the perishable item 20 is packed. That is, the state acquisition unit 130 acquires the state data of the perishable item 20 during physical distribution or after physical distribution, together with the tag ID.

This makes it possible for the data processing device 100 to use the tag ID as a common search key, and to associate the perishable item 20 packed in the container box 200, the environment in which the perishable item 20 is physically distributed, and the state of the perishable item 20 as a result during physical distribution or after physical distribution, with one another.

Next, in step 740, the data processing device 100 labels the environmental data. The learning unit 140 of the data processing device 100 labels, based on the state data of the perishable item 20, the environmental data when the perishable item 20 is physically distributed. The learning unit 140 applies, for example, a label of "A" to the environmental data which is obtained when the perishable item 20 whose state is evaluated as "A rank" is physically distributed. Similarly, the learning unit 140 applies, for example, a label of "E" to the environmental data which is obtained when the perishable item 20 whose state is evaluated as "E rank" is physically distributed. In this way, for each rank of the state data of the perishable item 20, the learning unit 140 applies a label, corresponding to each rank, to the environmental data which is obtained when the perishable item 20 is physically distributed.

Then, in step 750, the data processing device 100 learns the evaluation criterion for evaluating the physical distribution quality of the perishable item 20 by using the environmental data based on the state data of the perishable item 20. At this time, the learning unit 140 of the data processing device 100 learns the evaluation criterion for each rank with respect to each of the plurality of ranks. For example, the learning unit 140 learns the evaluation criterion for determining "physical distribution quality A" by collecting the environmental data labeled "A", and using the environmental data as a group of teacher data. Similarly, the learning unit 140 learns the evaluation criterion for determining "physical distribution quality E" by collecting the environmental data labeled "E", and using the environmental data as a group of teacher data. Here, the learning unit 140 may learn, as evaluation criteria, threshold values indicating allowable ranges such as upper limits and lower limits of various types of environmental data, or may learn a reference model of the environmental data indicating the environmental data in chronological order.

At this time, the learning unit 140 may learn the evaluation criterion additionally based on the characteristic data. For example, the learning unit 140 may learn the evaluation criterion for each characteristic of the perishable item 20 by classifying the labeled environmental data for each characteristic of the perishable item 20, and using, as a group of teacher data, the environmental data to which the same label is applied for the perishable items 20 classified as having the same characteristic. Thereby, the learning unit 140 respectively learns different evaluation criteria for the perishable items 20 having characteristics different from one another, and thus it is possible to evaluate the physical distribution quality by using the optimal evaluation criterion in accordance with the characteristic of the perishable items 20 in the evaluation of the physical distribution quality.

The learning unit 140 may use various algorithms in learning the evaluation criteria. For example, the learning unit 140 uses, as a learning algorithm, regression analysis, cluster distribution, principal component analysis, vector quantization, self-organizing map, neural network, support vector machine, ID3, naive Bayes classifier, and the like. Further, the learning unit 140 may generate the evaluation criterion by transfer learning from another model, or may generate the evaluation criterion by distilling another model.

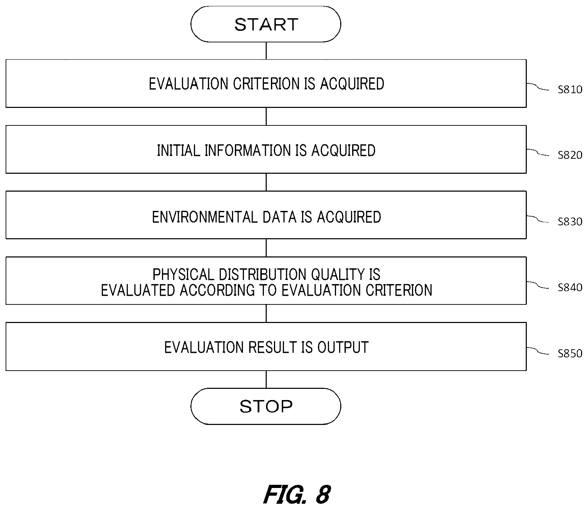

Fig. 8 shows an evaluation flow in which the data processing device 100 evaluates a physical distribution quality. In step 810, the data processing device 100 acquires the evaluation criterion. The evaluation unit 150 of the data processing device 100 acquires, from the learning unit 140, the evaluation criterion learned by the learning unit 140 according to the flow of Fig. 7. When the learning unit 140 learns the evaluation criterion for each rank, the evaluation unit 150 acquires, from the learning unit 140, the evaluation criterion for each rank. Further, when the learning unit 140 additionally learns the evaluation criterion for each characteristic, the evaluation unit 150 acquires, from the learning unit 140, the evaluation criterion for each characteristic.

In step 820, the data processing device 100 acquires the initial information of the perishable item 20 in response to the start of the physical distribution of the perishable item 20. Processing of step 820 is similar to the processing of step 710 in Fig. 7, the description thereof will be omitted.

Next, in step 830, the data processing device 100 acquires the environmental data indicating the physical distribution environment of the perishable item 20 in response to the perishable item 20 pre-cooled being placed in the container box 200 that has the refrigeration function and being physically distributed at room temperature. Processing of step 830 is similar to the processing of step 720 in Fig. 7, the description thereof will be omitted.

Then, in step 840, the data processing device 100 evaluates the physical distribution quality according to the evaluation criterion. For example, the evaluation unit 150 of the data processing device 100 reads, from the initial information acquired in step 820, the characteristic data of the perishable item 20 physically distributed at room temperature. Next, the evaluation unit 150 selects, from the evaluation criterion acquired for each characteristic in step 810, the evaluation criterion corresponding to the read characteristic data. Then, the evaluation unit 150 evaluates the physical distribution quality of the perishable item 20 according to the selected evaluation criterion by using the environmental data acquired in step 830. At this time, for example, the evaluation unit 150 evaluates the environmental data in light of the evaluation criterion for each rank, and determines which rank the environmental data corresponds to.

Further, the evaluation unit 150 may calculate, based on the evaluation result, the recommended storage environment for storing the perishable item 20 before physical distribution. For example, when there is a gap between the evaluation result and the actual state rank of the perishable item 20, the evaluation unit 150 may change the recommended storage environment for storing the perishable item 20 before physical distribution such as the pre-cooling method, the pre-cooling temperature, the pre-cooling time for pre-cooling the perishable item 20. That is, the evaluation unit 150 may feedback these recommended storage environments based on the evaluation results, and cause a new recommended storage environment to be applied to the subsequent physical distribution of the perishable item 20.

Further, the evaluation unit 150 may calculate, based on the evaluation result, the recommended physical distribution environment for physically distributing the perishable item 20. For example, when there is a gap between the evaluation result and the actual state rank of the perishable item 20, the evaluation unit 150 may change the recommended physical distribution environment for physically distributing the perishable item 20 such as the recommended amount of perishable item 20, and the recommended combination of the perishable items 20 at the time of the physical distribution. That is, the evaluation unit 150 may feed back these recommended physical distribution environments based on the evaluation results, and cause a new recommended physical distribution environment to be applied to the subsequent physical distribution of the perishable item 20.

Further, the evaluation unit 150 may calculate, based on the evaluation result, the recommended storage life for storing the perishable item 20 after physical distribution. For example, for the perishable item 20 with a high evaluation rank in physical distribution quality, the evaluation unit 150 may calculate the recommended storage life to be a storage life longer than that of the perishable item 20 with a lower evaluation rank in the physical distribution quality. That is, the evaluation unit 150 may calculate the recommended storage life to be a storage life in accordance with the evaluation result, and cause the storage life to be applied to setting of the shelf life time or the like of the perishable item 20 after physical distribution. Further, the recommended storage life may be, for example, a message or the like indicating a period during which the perishable item 20 can be retained at predetermined freshness as "From now on, in a case of being stored in this state, the freshness can be retained until xx month xx day", or the like.

Then, in step 850, the data processing device 100 outputs these evaluation results or the like. For example, the evaluation unit 150 of the data processing device 100 supplies the evaluation result or the like to the result output unit 160, and the result output unit 160 outputs the evaluation result or the like. At this time, for example, the result output unit 160 supplies the recommended storage environment and the recommended physical distribution environment to the first network device 310 of the shipping source 30 via the network 60. Further, the result output unit 160 may supply the evaluation result and the recommended storage life to the third network device 610 of the shipping destination 50 via the network 60.

In this way, the data processing device 100 feeds back the recommended storage environment and the recommended physical distribution environment based on the evaluation result, and thus in the shipping source 30, the pre-cooling under the optimal condition is possible while the combination and the amount of the perishable item 20 are optimized, for example, and thus it is possible to control the function of the perishable item 20 as a refrigerant in the physical distribution at room temperature. Further, the data processing device 100 supplies the evaluation result and the recommended storage life, and thus in the shipping destination 50, it is possible to inform, for example, without unpacking the container box 200 to directly evaluate the state of the perishable item 20, the worker of in what environment the perishable item 20 has been physically distributed, that is, in what state of freshness the perishable item 20 is. Further, the data processing device 100 can inform the worker of how long the shelf life of the perishable item 20 can be, or the like, the perishable item 20 having been physically distributed in such an environment.

As described above, with the data processing device 100 according to the present embodiment, the perishable item 20 is caused to function as a refrigerant to be physically distributed at room temperature, and thus the physical distribution at a low temperature performed by the refrigerator car, the freezer car, the refrigerator, the freezer, and the like, is not necessary, and in addition, it is not necessary to include the ice pack or the like in the container box 200. This makes it possible to reduce a risk of holding equipment for the physical distribution at a low temperature, and also to prevent the low temperature damage, the freshness deterioration, or the like, of the perishable item 20 which are due to misplacing or forgetting to place the ice pack, or the like. Further, the data processing device 100 objectively evaluates, according to the evaluation criterion, the physical distribution quality at the time of the physical distribution at room temperature, and thus it is possible to clarify the responsibility between business operators, and to visualize the safety and the freshness of the perishable item 20 as well. Further, by standardizing the physical distribution quality through the objective evaluation by using such a unified criterion in the bases, it is possible to increase added value of goods and services, and to strengthen power of brand. Further, anyone can determine a pass and fail regarding the quality without depending on the assessment of a wholesaler, or the like, and it is possible to remove the flow of the quality evaluation from an intuition and an experience of the worker. Further, with the data processing device 100 according to the present embodiment, the evaluation criterion for performing such an evaluation is learned. In the related art, it requires the worker's experience and a long time to adjust the evaluation criteria of the various perishable items 20 that have optimal freshness retention conditions different from one another. However, with the data processing device 100 according to the present embodiment, such an evaluation criterion is learned for each characteristic of the perishable item 20 by comparing the environmental data indicating the physical distribution environment of the perishable item 20, with the state data of the perishable item 20, and thus it is possible to provide the optimal evaluation criteria for the various perishable items 20 having characteristics different from one another.

As in the data processing device 100 according to the present embodiment, when the pre-cooled perishable item 20 is placed in the container box 200 with the refrigeration function, and is physically distributed at room temperature, various additions and changes can be made. For example, when the container box 200 is provided with the illuminance sensor, the data processing device 100 may determine whether the illuminance acquired from the illuminance sensor exceeds a predetermined threshold value. When it is determined that the threshold value is exceeded, the data processing device 100 may determine that the container box 200 has been unpacked during physical distribution such that the result output unit 160 outputs the fact. Further, when it is determined that the threshold value is not exceeded, the data processing device 100 may determine that the container box 200 is not unpacked during physical distribution, and estimate that the perishable item 20 packed in the container box 200 has been physically distributed under a proper environmental condition. At this time, instead of or in addition to the illuminance sensor, a sensor that detects whether the container box is appropriately closed may be used.

Further, when acquiring the environmental data of the perishable item 20 in physical distribution, the data processing device 100 may also acquire location information of the perishable item 20. Thereby, the data processing device 100 may realize traceability of the perishable item 20. For example, when acquiring the environmental data of the perishable item 20, the data processing device 100 may store the environmental data and the location information of the perishable item 20 in association with each other, and determine what environmental data changes at what location in physical distribution. In this way, the data processing device 100 may be configured to be able to trace back, based on the location information, the change of the environmental data which occurs during physical distribution of the perishable item 20.

Further, the data processing device 100 may actively control the opening degree of the adjustment valve 232 provided in the container box 200. For example, the data processing device 100 may output, as the recommended physical distribution environment, the recommended gas composition when the perishable item 20 is physically distributed, and cause the opening degree of the adjustment valve 232 to be automatically or manually controlled such that the gas composition in the internal space of the container box 200 is the recommended gas composition.

Further, the data processing device 100 may acquire external environmental data, and adjust the recommended storage environment, the recommended physical distribution environment, the recommended storage life, and the like according to the external environmental data. For example, in a case where the outside temperature is higher than a predetermined threshold value, the data processing device 100 may adjust the recommended storage environment such that the pre-cooling temperature is lower, or the pre-cooling time is longer than a case where the outside temperature is lower than the predetermined threshold value. Further, in the case where the outside temperature is higher than a predetermined threshold value, the data processing device 100 may adjust the recommended physical distribution environment such that the recommended amount of perishable item 20 when the perishable items 20 is physically distributed is larger than the case where the outside temperature is lower than the predetermined threshold value. Further, in the case where the outside temperature is higher than a predetermined threshold value, the data processing device 100 may adjust the recommended storage life such that the recommended storage life for storing perishable item 20 after physical distribution is shorter than the case where the outside temperature is lower than the predetermined threshold value.

Further, the data processing device 100 may estimate the physical distribution quality of the perishable item 20 from a comparison result of the environmental data in the surrounding atmosphere of the perishable item 20 before physical distribution, and the environmental data in the surrounding atmosphere of the perishable item 20 after physical distribution. For example, the data processing device 100 may acquire the temperature in the surrounding atmosphere of the perishable item 20 before physical distribution to store the temperature as an initial value, compare the initial value with the temperature in the surrounding atmosphere of the perishable item 20 after physical distribution, and estimate the physical distribution quality of the perishable item 20 according to the comparison result. That is, the data processing device 100 may calculate a difference between the environmental data after physical distribution and the environmental data before physical distribution, and estimate that the physical distribution quality of the perishable item 20 satisfies a quality of a certain level or higher, when the difference is lower than a predetermined threshold value, and estimate that the physical distribution quality of the perishable item 20 does not satisfy the quality of the certain level or higher when the difference is higher than or equal to the predetermined threshold value.

Further, an attachment whose state changes with the change of the environmental data over time may be attached to the package body such as the corrugated cardboard in which the perishable item 20 is placed, so that the data processing device 100 acquires the state of the attachment during physical distribution or after physical distribution to estimate, based on the state, the environment in which the perishable item 20 is physically distributed. For example, a seal whose color changes with the change of the temperature over time may be attached to the package body, so that the data processing device 100 acquires the state data of the seal during physical distribution or after physical distribution to estimate, based on the state data, the environment in which the perishable item 20 is physically distributed. That is, the data processing device 100 may estimate that the physical distribution quality of the perishable item 20 satisfies a quality of a certain level or higher, when the state change of the attachment attached to the package body of the perishable item 20 is lower than a predetermined threshold value, and estimate that the physical distribution quality of the perishable item 20 does not satisfy the quality of the certain level or higher when the state change of the attachment is higher than or equal to the predetermined threshold value.

Various embodiments of the present invention may be described with reference to flowcharts and block diagrams whose blocks may represent (1) steps of processes in which operations are performed or (2) sections of apparatuses responsible for performing operations. Certain steps and "sections" may be implemented by dedicated circuitry, programmable circuitry supplied with computer-readable instructions stored on computer-readable media, and/or processors supplied with computer-readable instructions stored on computer-readable media. Dedicated circuitry may include digital and/or analog hardware circuits and may include integrated circuits (IC) and/or discrete circuits. Programmable circuitry may include reconfigurable hardware circuits comprising logical AND, OR, XOR, NAND, NOR, and other logical operations, flip-flops, registers, memory elements, etc., such as field-programmable gate arrays (FPGA), programmable logic arrays (PLA), and the like.

Computer-readable media may include any tangible device that can store instructions for execution by a suitable device. As a result, the computer-readable medium having instructions stored in the tangible device comprises an article of manufacture including instructions which can be executed to create means for performing operations specified in the flowcharts or block diagrams. Examples of computer-readable media may include an electronic storage medium, a magnetic storage medium, an optical storage medium, an electromagnetic storage medium, a semiconductor storage medium, etc. More specific examples of computer-readable media may include a floppy(registered trademark) disk, a diskette, a hard disk, a random access memory (RAM), a read-only memory (ROM), an erasable programmable read-only memory (EPROM or Flash memory), an electrically erasable programmable read-only memory (EEPROM), a static random access memory (SRAM), a compact disc read-only memory (CD-ROM), a digital versatile disk (DVD), a Blu-ray(registered trademark) disc, a memory stick, an integrated circuit card, etc.

Computer-readable instructions may include assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, JAVA(registered trademark), C++, etc., and conventional procedural programming languages, such as the "C" programming language or similar programming languages.

Computer-readable instructions may be provided to a processor of a general-purpose computer, special purpose computer, or other programmable data processing apparatus, or to programmable circuitry, locally or via a local area network (LAN), wide area network (WAN) such as the Internet, etc., so that the computer-readable instructions is executed to create means for performing operations specified in the flowcharts or block diagrams. Examples of processors include computer processors, processing units, microprocessors, digital signal processors, controllers, microcontrollers, etc.

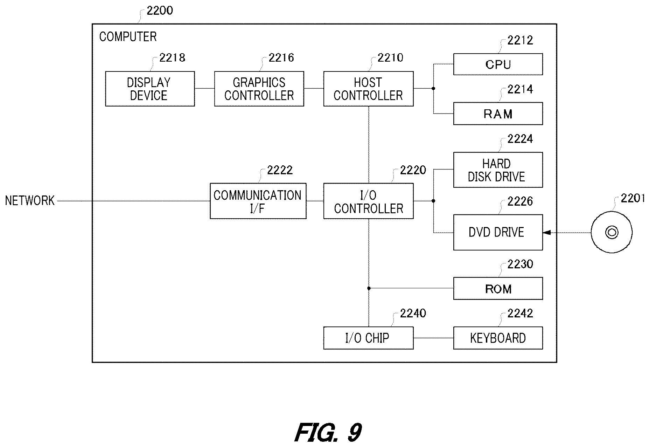

Fig. 9 shows an example of a computer 2200 in which a plurality of aspects of the present invention may be embodied entirely or partially. A program that is installed in the computer 2200 can cause the computer 2200 to function as the operation associated with an apparatus according to embodiments of the present invention or as one or more sections thereof, or cause the computer 2200 to perform the operation or the one or more sections thereof, and/or cause the computer 2200 to perform processes of the embodiment of the present invention or steps thereof. Such a program may be performed by a CPU 2212 so as to cause the computer 2200 to perform certain operations associated with some or all of the blocks of flowcharts and block diagrams described herein.

The computer 2200 according to the present embodiment includes a CPU 2212, a RAM 2214, a graphics controller 2216, and a display device 2218, which are mutually connected by a host controller 2210. The computer 2200 also includes input/output units such as a communication interface 2222, a hard disk drive 2224, a DVD-ROM drive 2226, and an IC card drive, which are connected to the host controller 2210 via an input/output controller 2220. The computer also includes legacy input/output units such as a ROM 2230 and a keyboard 2242, which are connected to the input/output controller 2220 via an input/output chip 2240.

The CPU 2212 operates according to programs stored in the ROM 2230 and the RAM 2214, thereby controlling each unit. The graphics controller 2216 acquires image data generated by the CPU 2212 on a frame buffer or the like provided in the RAM 2214 or in itself, and causes the image data to be displayed on the display device 2218.

The communication interface 2222 performs communication with other electronic devices via a network. The hard disk drive 2224 stores programs and data that are used by the CPU 2212 within the computer 2200. The DVD-ROM drive 2226 reads the programs or the data from the DVD-ROM 2201, and provides the hard disk drive 2224 with the programs or the data via the RAM 2214. The IC card drive reads programs and data from an IC card, and/or writes programs and data into the IC card.

The ROM 2230 stores therein a boot program or the like that is performed by the computer 2200 at the time of activation, and/or a program depending on the hardware of the computer 2200. The input/output chip 2240 may also connect various input/output units to the input/output controller 2220 via a parallel port, a serial port, a keyboard port, a mouse port, or the like.

A program is provided by computer-readable media such as the DVD-ROM 2201 or the IC card. The program is read from the computer-readable media, installed into the hard disk drive 2224, RAM 2214, or ROM 2230, which are also examples of computer-readable media, and performed by the CPU 2212. Information processing written in these programs is read by the computer 2200, resulting in cooperation between a program and the above-mentioned various types of hardware resources. An apparatus or method may be constituted by realizing the operation or processing of information in accordance with the usage of the computer 2200.

For example, when communication is performed between the computer 2200 and an external device, the CPU 2212 may perform a communication program loaded onto the RAM 2214 to instruct communication processing to the communication interface 2222, based on the processing written in the communication program. The communication interface 2222, under control of the CPU 2212, reads transmission data stored on a transmission buffer region provided in a recording medium such as the RAM 2214, the hard disk drive 2224, the DVD-ROM 2201, or the IC card, and transmits the read transmission data to a network or writes reception data received from a network into a reception buffer region or the like provided on the recording medium.

In addition, the CPU 2212 may cause all or a necessary portion of a file or a database to be read into the RAM 2214, the file or the database having been stored in an external recording medium such as the hard disk drive 2224, the DVD-ROM drive 2226 (DVD-ROM 2201), the IC card, etc., and perform various types of processing on the data on the RAM 2214. The CPU 2212 then writes back the processed data to the external recording medium.

Various types of information, such as various types of programs, data, tables, and databases, may be stored in the recording medium to undergo information processing. The CPU 2212 may execute various types of processing on the data read from the RAM 2214 to write back a result to the RAM 2214, the processing being described throughout the present disclosure, specified by an instruction sequence of the programs, and including various types of operations, processing of information, condition determinations, conditional branch, unconditional branch, information retrievals/replacements, or the like. In addition, the CPU 2212 may search for information in a file, a database, etc., in the recording medium. For example, when a plurality of entries, each having an attribute value of a first attribute associated with an attribute value of a second attribute, are stored in the recording medium, the CPU 2212 may search for an entry matching the condition whose attribute value of the first attribute is designated, from among the plurality of entries, and read the attribute value of the second attribute stored in the entry, thereby obtaining the attribute value of the second attribute associated with the first attribute satisfying the predetermined condition.

The above-described program or software modules may be stored in the computer-readable media on or near the computer 2200. In addition, a recording medium such as a hard disk or a RAM provided in a server system connected to a dedicated communication network or the Internet can be used as the computer-readable media, thereby providing the program to the computer 2200 via the network.

While the embodiments of the present invention have been described, the technical scope of the invention is not limited to the above-described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

- 10: evaluation system

- 20: perishable item
- 30: shipping source
- 40: physical distribution means
- 50: shipping destination
- 60: network
- 100: data processing device
- 110: environment acquisition unit
- 120: characteristic acquisition unit
- 130: state acquisition unit
- 140: learning unit
- 150: evaluation unit
- 160: result output unit
- 200: container box
- 210: pallet
- 220: heat insulation sheet
- 230: side wall panel
- 232: adjustment valve
- 240: top plate panel
- 250: sensor node
- 310: first network device
- 320: first tag reader and writer
- 330: first input unit
- 340: first output unit
- 510: second network device
- 520: second tag reader and writer
- 530: second input unit
- 540: second output unit
- 610: third network device
- 620: third tag reader and writer
- 630: third input unit
- 640: third output unit
- 2200: computer
- 2201: DVD-ROM
- 2210: host controller
- 2212: CPU
- 2214: RAM
- 2216: graphics controller
- 2218: display device
- 2220: input/output controller
- 2222: communication interface
- 2224: hard disk drive
- 2226: DVD-ROM drive
- 2230: ROM
- 2240: input/output chip
- 2242: keyboard

## Claims

1. A data processing device comprising:
an environment acquisition unit configured to acquire environmental data indicating a physical distribution environment of a perishable item;
a state acquisition unit configured to acquire state data indicating a state of the perishable item; and
a learning unit configured to learn an evaluation criterion for evaluating a physical distribution quality of the perishable item by using the environmental data based on the state data.

2. The data processing device according to claim 1, wherein
the state data is data obtained by ranking the state of the perishable item into a plurality of ranks, and
the learning unit is configured to learn the evaluation criterion for each rank with respect to at least one of the plurality of ranks.

3. The data processing device according to claim 1 or 2, further comprising:
a characteristic acquisition unit configured to acquire characteristic data indicating a characteristic of the perishable item,
wherein the learning unit is configured to learn the evaluation criterion additionally based on the characteristic data.

4. The data processing device according to any one of claims 1 to 3, further comprising:
an evaluation unit configured to evaluate the physical distribution quality according to the evaluation criterion by using the environmental data; and
a result output unit configured to output an evaluation result of the physical distribution quality.

5. The data processing device according to claim 4,
wherein the evaluation unit is configured to calculate, based on the evaluation result, a recommended storage environment for storing the perishable item before physical distribution.

6. The data processing device according to claim 4 or 5,
wherein the evaluation unit is configured to calculate, based on the evaluation result, a recommended physical distribution environment for physically distributing the perishable item.

7. The data processing device according to claim 6,
wherein the recommended physical distribution environment includes a recommended amount of the perishable item.

8. The data processing device according to claim 6 or 7,
wherein the recommended physical distribution environment includes a recommended combination of perishable items, each of which being identical to the perishable item.

9. The data processing device according to any one of claims 4 to 8,
wherein the evaluation unit is configured to calculate, based on the evaluation result, a recommended storage life for storing the perishable item after physical distribution.

10. The data processing device according to any one of claims 1 to 9,
wherein the environmental data includes at least any of a temperature, humidity, a gas composition, an illuminance, and a vibration over time in a surrounding atmosphere of the perishable item.

11. A data processing device comprising:
an environment acquisition unit configured to acquire environmental data indicating a physical distribution environment of a perishable item;
an evaluation unit configured to evaluate a physical distribution quality of the perishable item according to an evaluation criterion by using the environmental data; and
a result output unit configured to output an evaluation result of the physical distribution quality.

12. The data processing device according to claim 11, wherein
the evaluation unit is configured to calculate, based on the environmental data, a recommended storage life for storing the perishable item after physical distribution, and
the result output unit is configured to display the recommended storage life.

13. The data processing device according to claim 11 or 12,
wherein the evaluation unit has, as the evaluation criterion, a machine-learned model trained to output the physical distribution quality by inputting the environmental data.

14. A data processing method in which a data processing device processes data, the data processing method comprising:
acquiring environmental data indicating a physical distribution environment of a perishable item;
acquiring state data indicating a state of the perishable item; and
learning an evaluation criterion for evaluating a physical distribution quality of the perishable item by using the environmental data based on the state data.

15. A data processing program that is executed by a computer and causes the computer to function as:
an environment acquisition unit configured to acquire environmental data indicating a physical distribution environment of a perishable item;
a state acquisition unit configured to acquire state data indicating a state of the perishable item; and
a learning unit configured to learn an evaluation criterion for evaluating a physical distribution quality of the perishable item by using the environmental data based on the state data.

16. An evaluation system comprising:
an environment acquisition unit configured to acquire, in response to a perishable item that is pre-cooled being placed in a container box with a refrigeration function and being physically distributed at room temperature, environmental data of a surrounding atmosphere of the perishable item; and
an evaluation unit configured to evaluate a physical distribution quality by using the acquired environmental data.

17. An evaluation method in which an evaluation system performs an evaluation, the evaluation method comprising:
acquiring, in response to a perishable item that is pre-cooled being placed in a container box with a refrigeration function and being physically distributed at room temperature, environmental data of a surrounding atmosphere of the perishable item; and
evaluating a physical distribution quality by using the acquired environmental data.

18. An evaluation program that is executed by a computer and causes the computer to function as:
an environment acquisition unit configured to acquire, in response to a perishable item that is pre-cooled being placed in a container box with a refrigeration function and being physically distributed at room temperature, environmental data of a surrounding atmosphere of the perishable item; and
an evaluation unit configured to evaluate a physical distribution quality by using the acquired environmental data.
